# EUROPEAN PATENT APPLICATION

(11) **EP 4 810 998 A2**
(43) Date of publication of application: **23.09.2026**
(21) Application number: 26188351.6
(22) Date of filing: 07.02.2024
(51) Int. Cl.: G01S 13/931

(54) **A METHOD OF OPERATING A RADAR SYSTEM, WHEREIN POSITION INFORMATION OF DETECTED TARGETS ARE DETERMINED BY USE OF MACHINE LEARNING, RADAR SYSTEM, DRIVER ASSISTANCE SYSTEM AND VEHICLE**

(30) Priority: 10.02.2023 DE 102023103288
(62) Document number(s) of the earlier application(s) in accordance with Art. 76 EPC: 24705382.0 / 4 662 511
(71) Applicant: Valeo Schalter und Sensoren GmbH, 74321 Bietigheim-Bissingen (DE)
(72) Inventor: Jenkins, Alan, 74321 Bietigheim-Bissingen (DE)
(74) Representative: Valeo Schalter und Sensoren

(57) **Abstract**

A method of operating a radar system (14), in particular a radar system (14) for a vehicle (10), a radar system (14), a driver assistance system from (12) and a vehicle (10) are described. In the method at least one electromagnetic radar signal (22) is transmitted from at least one transmit antenna element (34) of the radar system (14). At least one electromagnetic echo signal (40) resulting from at least one radar signal (22) reflected from at least one target (20) in the field of view of the radar system (14) is received by at least one receiving antenna element (38) and converted into received data (72) suitable for signal processing. The radar system (14) is operated as a MIMO radar comprising multiple transmit antenna elements (34) and multiple receiving antenna elements (38), wherein the transmit antenna elements (34) and the receiving antenna elements (38) generate a virtual antenna array with multiple virtual antenna elements for receiving echo signals (40) during a MIMO operation of the radar system (14). For at least a part of the virtual antenna elements each a magnitude information and a phase information are determined from the at least one part of the received data by performing at least one two-dimensional fast Fourier transform. At least one array data set is determined, which comprises at least the magnitude information and the phase information of the at least one part of the virtual antenna elements. At least a part of the data of the at least one array data set is fed to at least one neural network (64), with which at least one position information for the at least one detected target (20) is determined.

## Description

### Technical Field

The present invention relates to a method of operating a radar system, in particular a radar system for a vehicle, in which
at least one electromagnetic radar signal is transmitted from at least one transmit antenna element of the radar system,
at least one electromagnetic echo signal resulting from at least one radar signal reflected from at least one target in the field of view of the radar system is received by at least one receiving antenna element and converted into received data suitable for signal processing,
at least one magnitude information and at least one phase information corresponding to the at least one received echo signal are determined from at least a part of the received data,
at least one position information is determined by use of machine learning, wherein the at least one position information characterizing at least the direction of the at least one detected target relative to a reference system, which is related to the radar system.

Further, the present invention relates to a radar system, in particular a radar system of a vehicle, comprising
at least one transmit antenna element for transmitting electromagnetic radar signals,
at least one receiving antenna element for receiving electromagnetic echo signals, means for converting electromagnetic echo signals into received data suitable for signal processing,
means for determining magnitude information and phase information from received data, means for determining at least one position information characterizing at least the direction of the at least one detected target by use of machine learning.

Furthermore the present invention relates to a driver assistance system comprising at least one radar system, wherein the at least one radar system comprising
at least one transmit antenna element for transmitting electromagnetic radar signals,
at least one receiving antenna element for receiving electromagnetic echo signals,
means for converting electromagnetic echo signals into received data suitable for signal processing,
means for determining magnitude information and phase information from received data, means for determining at least one position information characterizing at least the direction of the at least one detected target by use of machine learning.

Moreover, the present invention relates to a vehicle comprising at least one radar system, wherein the at least one radar system comprising
at least one transmit antenna element for transmitting electromagnetic radar signals,
at least one receiving antenna element for receiving electromagnetic echo signals,
means for converting electromagnetic echo signals into received data suitable for signal processing,
means for determining magnitude information and phase information from received data, means for determining at least one position information characterizing at least the direction of the at least one detected target by use of machine learning.

### State of Technology

In the US 20210156985 A1 techniques and apparatuses are described for radar angular ambiguity resolution. These techniques enable a target's angular position to be determined from a spatial response that has multiple amplitude peaks. Instead of solely considering which peak has a highest amplitude, the techniques for radar angular ambiguity resolution select a frequency sub spectrum, or multiple frequency sub-spectrums, that emphasize amplitude or phase differences in the spatial response and analyze an irregular shape of the spatial response across a wide field of view to determine the target's angular position. In this way, each angular position of the target has a unique signature, which the radar system can determine and use to resolve the angular ambiguities. Using these techniques, the radar can have an antenna array element spacing that is greater than half a center wavelength of a reflected radar signal that is used to detect the target. The radar system determines an angular position of the target by detecting a radar signal that is reflected from the target and determining which steering angle corresponds to an angle of arrival of the radar signal. Digital beamforming is used to generate a spatial response, which includes amplitude and phase information for different steering angles. An angle estimator receives the spatial response and estimates the angular position of the target by analyzing the shape of the spatial response across the field of view. In some aspects, the angle estimator can use signal processing techniques, pattern matching techniques, or machine learning to determine the angle of arrival of the radar signal. Example signal processing techniques can utilize algorithms to analyze the shape of the spatial response and determine differences that indicate the direction of the target.

It is an objective of the invention to provide a method, a radar system, a driver assistance system and a vehicle, where the determination of position information of targets, in particular of directions of targets, detected with the radar system can be improved.

### Disclosure of Invention

The objective of the invention is achieved with the method in that
the radar system is operated as a multiple-input multiple-output radar comprising multiple transmit antenna elements and multiple receiving antenna elements, wherein the transmit antenna elements and the receiving antenna elements generate a virtual antenna array with multiple virtual antenna elements for receiving echo signals during a multiple-input multiple-output operation of the radar system,
for at least a part of the virtual antenna elements each a magnitude information and a phase information are determined from the at least one part of the received data by performing at least one two-dimensional fast Fourier transform,
at least one array data set is determined, which comprises at least the magnitude information and the phase information of the at least one part of the virtual antenna elements,
at least a part of the data of the at least one array data set is fed to at least one neural network, with which at least one position information for the at least one detected target is determined.

According to the invention, the radar system is operated as a multiple-input multiple-output (MIMO) radar. The MIMO radar comprises multiple transmit antenna elements and multiple receiving antenna elements. The transmit antenna elements and the receiving antenna elements create a virtual antenna array with multiple virtual antenna elements during a MIMO operation of the radar system. In this way, the number of receiving antenna elements, which act as sampling points for echo signals, can be increased. The resolution for position information can also be improved in this way.

With the two-dimensional fast Fourier transform (2D FFT) the received data are transformed into at least one array data set. The at least one array data set comprises at least the magnitude information and the phase information gained with the at least one part of the virtual antenna elements. In this way, the received data is transformed into a magnitude/phase domain. The array data set characterizes a 2D FFT spectrum. In the 2D FFT spectrum of the ambiguity function across the virtual antenna array a characteristic pattern of side lobes can be observed. This aperture pattern can be called "aperture pattern". The aperture pattern is relatively simple in the case of only one or two detected targets, but increases in complexity for larger target numbers. The aperture pattern is determined by both the magnitude information and the phase information of each target as they mix (superpose) together.

The complex mixing of received data from echo signals of two or more targets in a single range/Doppler cell creates unique aperture patterns. By identifying these unique aperture patterns, the position information, in particular the respective directions, for two or more targets can be separated. The resolution is characterized by the ability of separating two or more targets in the same range/Doppler bin. This resolution is related to the arrangement of the antenna subarrays, in particular of the transmit antenna array and the receiving antenna array. According to the invention, more than one target can be resolved by using the ambiguities.

At least a part of the data of the array data set is fed to at least one neural network. With the at least one neural network at least one position information for a position of the at least one detected target is determined. By the use of the at least one neural network according to the invention the aperture can be highly sampled to simplify side lobe patterns. Further, planes of symmetry which can lead to mirror ambiguities can be worked out.

Advantageously, for any given set of targets and the phase/magnitude relation between them, aperture patterns as functions of the magnitude information and the phase information can be determined. By learning the at least one neural network which data of the array data set creates the respective target combination, the position, in particular the direction, of at least one target can be isolated. Even a large initial training array data set can be systematically created using appropriate simulation techniques.

According to the invention, the magnitude information and the phase information and, if so, time information are treated as a single image, from which the at least one position information, in particular the direction information, can be learned by use of the at least one neural network. The image of the magnitude information and the image of the phase information and, if so, the time information are paired and associated with a unique position information, in particular a unique direction information.

A target in the sense of the invention is an area or a reflection point of an object from which radar signals can be reflected. An object can have one or more such targets. If the object has several targets, radar signals can also be reflected differently from these, for example in different directions. Targets detected with the radar system may be referred to as "detected targets" for easier distinction.

With the radar system, at least direction information which characterize directions of targets can be determined. In addition, the radar system can be used to determine ranges information and/or velocity information, which characterize ranges and/or velocities of targets relative to the radar system and/or to the vehicle.

The magnitude information, the phase information and the position information, in particular the direction information, may include analog or digital signals or data, real numbers, complex values or numbers sets of data, signals, numbers or values.

Depending on the means for signal processing, the received data may include electrical signals or electrical values, for example based on digital values like bits. In this way, the received data can be processed by electrical means for signal processing. Additionally or alternatively, the received data may include optical signals or values, for example based on qubits. In this way, the received data can be processed by optical means for signal processing, for example, quantum processors.

Advantageously, the echo signals can be converted into received data by analog-to-digital converters. In this way, the received data can be determined as digital data.

The reference system, which is related to the radar system, can comprise a reference point, a reference line and/or a reference plane. If the radar system is used on a vehicle, the reference system may also be related to the vehicle. In this case, the reference system can comprise a reference point, a reference line and/or a reference plane, for example a virtual axis of the vehicle, e.g. a longitudinal axis, a vertical axis or a transverse axis of the vehicle. Advantageously, one reference system can be a spherical coordinate system. Azimuth and elevation can serve as position information to characterize the directions of the detected targets. Additionally or alternatively, one reference system may be a Cartesian coordinate system. X, y and z coordinates may serve as position information for characterizing the positions of the detected targets. Vectors with x, y and z coordinates can describe the directions of the detected targets.

The invention may be used for radar systems of vehicles, in particular motor vehicles. Advantageously, the invention may be used on land vehicles, in particular passenger cars, lorries, buses, motorcycles or the like, aircraft and/or watercraft. The invention may also be used for radar systems of vehicles which can be operated autonomously or partially autonomously. However, the invention is not limited to vehicles. It can also be used in stationary operation, robotics, drones and/or machines, in particular construction or transport machines, such as cranes, excavators or the like.

The radar system may advantageously be connected to or be part of at least one control device of a vehicle or a machine, in particular a driver assistance system. In this way autonomous or partially autonomous operation of the vehicle or the machine can be enabled.

The invention can be used for radar systems that are designed as front radar systems, corner radar systems, rear radar systems, roof radar systems, underbody radar systems or interior radar systems of vehicles. Accordingly, the radar system can be a front radar system, a corner radar system, a rear radar system, a roof radar system, an underbody radar system or an interior radar system of the vehicle.

The radar system can be used to detect targets of stationary or moving objects, in particular vehicles, persons, animals, obstacles, road unevenness, in particular potholes or stones, road limitations, open spaces, in particular parking spaces, precipitations or the like.

According to a favorable embodiment, as at least one position information at least one direction information, in particular an angle, for example the azimuth and/or the elevation, and/or a vector, can be determined, which characterizes a direction of the at least one detected target relative to the reference system. In this way, directions of detected targets can be determined.

Advantageously, the direction information can be an angle, in particular an angle of arrival (AoA). In this way, the direction from which the echo signals arrive, can be detected.

Advantageously, the azimuth and/or elevation can be determined as direction information. In this way, the position of the at least one target can be defined in a spherical coordinate system. Additionally or alternatively, a vector can be determined as at least one position information. In this way, the position of the at least one target can be defined in a Cartesian coordinate system. Such a vector can comprise Cartesian coordinates, in particular x, y and/or z coordinates.

According to another favorable embodiment, the at least one magnitude information and the at least one phase information and, if so, time information can be realized as complex values, in particular as complex vectors. In this way, magnitude information and phase information and, if so, time information can be combined very efficient. So, the magnitude information and the phase information and, if so, time information can be efficiently processed with mathematical algorithms.

According to another favorable embodiment, additionally time information can be determined for at least a part of the virtual antenna elements. In this way, the pattern of the 2D FFT can also have a time component as the movement of the at least one target causes the phase relationships to change. The pattern of both magnitude information and phase information can have a time-dependent signature in some cases.

According to another favorable embodiment, the at least one part of the data of the array data set can be fed to at least one neural network designed as a spiking neural network.

In this way, position information also for moving targets, which cause change of magnitude information and/or phase information over time, can be learned with the at least one neural network. Spiking neural networks are well adapted to the temporal information content nature of typical radar echo signals, both in terms of time and processed parameters such as angle, distance, Doppler values. Spiking neural networks incorporate a concept of time into their structure. With spiking neural networks complexity and power consumption of the radar system can be reduced. The spiking neural networks can efficiently be implemented in Neuromorphic hardware.

Alternatively, neural processing units (NPU) in combination with convolutional neural networks (CNN) can be used. The neural processing units can be hardware accelerated. So, just magnitude and phase images can be treated as a learning data set for the neural network.

According to another favorable embodiment, an antenna system with the transmit antenna elements and the receiving antenna elements can be arranged and operated in a way to create an undersampled system and/or an antenna array with the transmit antenna elements and the receiving antenna elements can be arranged and operated in a way to create a sparse virtual antenna array. In this way, the ratio between the aperture and the number of antenna elements required is improved. The aperture of the virtual antenna array can be increased.

The virtual antenna elements are sampling points for echo signals. The extension of the virtual antenna array defines the aperture of the antenna arrangement. The angular resolution is related to the physical distance between the most widely spaced virtual antenna elements with respect to the wavelength of the radar signals.

Advantageously, the virtual antenna elements can be located in one plane. In this way the virtual antenna array can be aligned more easily.

Advantageously, four most distant virtual antenna elements can be arranged at the corners of a rectangle, in particular a square. In this way, a rectangular virtual antenna array can be realized. Thus, the aperture clearly can be defined in two orthogonal directions, for example in direction of azimuth and elevation. The four most distant virtual antenna elements can be arranged at the corners of a square. Thus, the aperture in the two orthogonal direction is equal. In this way, the angular resolution in both orthogonal directions can be defined in a general way.

Advantageously, the side lengths of the rectangle can correspond in each case to the integer multiple of half the wavelength of the radar signals. In this way, the distance between the virtual antenna elements arranged on adjacent corners of the rectangle each correspond to the integer multiple of half the wavelength of the radar systems.

By placing the virtual antenna elements far apart, an undersampled system can be realized. Thus, the aperture will show an aliasing related to the spacing. Position information then determined, in particular angles of arrival, is ambiguous.

According to another favorable embodiment, four most distant virtual antenna elements can be arranged at the corners of a rectangle, in particular a square, whose side length each correspond to integer multiples of half the wavelength of the radar signals, and at least one additional virtual antenna element can be arranged at a distance of approximately the half of a wavelength of the radar signals from one of the four most distant virtual antenna elements. In this way, position information at least for one target can be determined with a reasonable aperture.

According to another favorable embodiment, a two-step learning technique can be applied for learning the at least one neural network. In this way, the at least one neural network can learn very efficiently.

Advantageously, the two-step learning technique can be started by feeding idealized artificial array data sets to the neural network. The idealized array data sets can characterize idealized aperture patterns. In this way, the network can learn the learning principal. Then, a so-called starter enhancement can be performed. For this purpose, the complexity of the idealized artificial array data sets in particular can be increased by adding noise and/or random variations. Finally, the neural network can be fed with real recorded array data sets.

According to another favorable embodiment, the at least one neural network can be learned by array data sets both from the magnitude information and the phase information. In this way, even complex array data sets, which characterize complex aperture patterns, can be recognized with the at least one neural network.

Further, the objective of the invention is solved in the radar system in that the radar system comprises at least a part of means for carrying out the method according to the invention.

According to the invention, the radar system is designed as a MIMO radar. The radar system comprises multiple transmit antenna elements and multiple receiving antenna elements. The radar system comprises means for controlling the transmit antenna elements and the receiving antenna elements in a MIMO operation such, that a virtual antenna array with multiple virtual antenna elements for receiving echo signals are generated.

Further, the means for carrying out the method according to the invention comprises means for performing at least one two-dimensional fast Fourier transform for determining magnitude information and phase information from received data.

Furthermore, the means for carrying out the method according to the invention comprise means for determining array data sets, which comprise at least the magnitude information and the phase information of virtual antenna elements.

Moreover, the means for carrying out the method according to the invention comprise means for implementing at least one neural network to which data of array data sets can be fed for determining position information for detected targets.

Advantageously, the means for carrying out the method according to the invention can comprise at least one neural network, in particular at least one spiking neural network. In this way, position information for detected targets can be determined from data of array data sets.

At least a part of the means for carrying out the method according to the invention can be realized by software. In this way, in particular flow charts, in particular programs, algorithms and/or implementation tables for carrying out the method can be stored in the radar system. Additionally or alternatively, at least a part of the means for carrying out the method according to the invention can be realized by hardware.

Furthermore, the objective of the invention is solved in the driver assistance system in that the driver assistance system comprises at least a part of means for carrying out the method according to the invention.

According to the invention, the driver assistance system has at least one radar system, in particular at least one radar system according to the invention. Advantageously, at least one radar system of the driver assistance system may comprise at least part of means for carrying out the method according to the invention. Since the at least one radar system is part of the driver assistance system, the means of the at least one radar system are thus also part of the driver assistance system. This applies analogously with respect to means of the vehicle, which has at least one driver assistance system and/or at least one radar system.

Moreover, the objective of the invention is solved in the vehicle in that the vehicle comprises at least a part of means for carrying out the method according to the invention.

The vehicle comprises at least one radar system. With the at least one radar system, an environment of the vehicle and/or an interior of the vehicle can be monitored.

Advantageously, the vehicle can comprise at least one driver assistance system. With the driver assistance system information obtained from the at least one radar system can be used for the autonomous or at least partly autonomous operation of the vehicle.

Advantageously, at least one radar system can be part of or connected to at least one driver assistance system. In this way information acquired with the at least one radar system can be transmitted to a control unit of the at least one driver assistance system.

Additionally or alternatively, at least a part of the means for performing the method according to the invention can be realized separately from the at least one radar system, for example with a control device of the vehicle and/or a control device of the driver assistance system.

In other respects, the features and advantages shown in connection with the method according to the invention, the radar system according to the invention, the driver assistance system according to the invention and the vehicle according to the invention and their respective advantageous embodiments apply mutatis mutandis and vice versa. The individual features and advantages can of course be combined with one another, whereby further advantageous effects can arise which go beyond the sum of the individual effects.

### Brief Description of Drawings

The present invention together with the above-mentioned and other objects and advantages may best be understood from the following detailed description of the embodiments, but not restricted to the embodiments, wherein is shown schematically
- figure 1: a top view of a vehicle with a driver assistance system comprising a radar system;
- figure 2: the vehicle of figure 1 in a side view;
- figure 3: a functional diagram of the vehicle with the driver assistance system of figures 1 and 2;
- figure 4: a virtual antenna array generated by a transmit antenna array and receiving antenna array of the radar system of the vehicle of figures 1 to 3 in a MIMO operational mode according to a first example;
- figure 5: a virtual antenna array generated by a transmit antenna array and receiving antenna array of the radar system of the vehicle of figures 1 to 3 in a MIMO operational mode according to a second example;
- figure 6: a virtual antenna array generated by a transmit antenna array and receiving antenna array of the radar system of the vehicle of figures 1 to 3 in a MIMO operational mode according to a third example;
- figure 7: a flowchart for a method of operating the radar system of the vehicle from figures 1 to 3;
- figure 8: a magnitude array image visualizing an aperture pattern for magnitude information for multiple targets detected with the radar system of the vehicle of figures 1 to 3.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

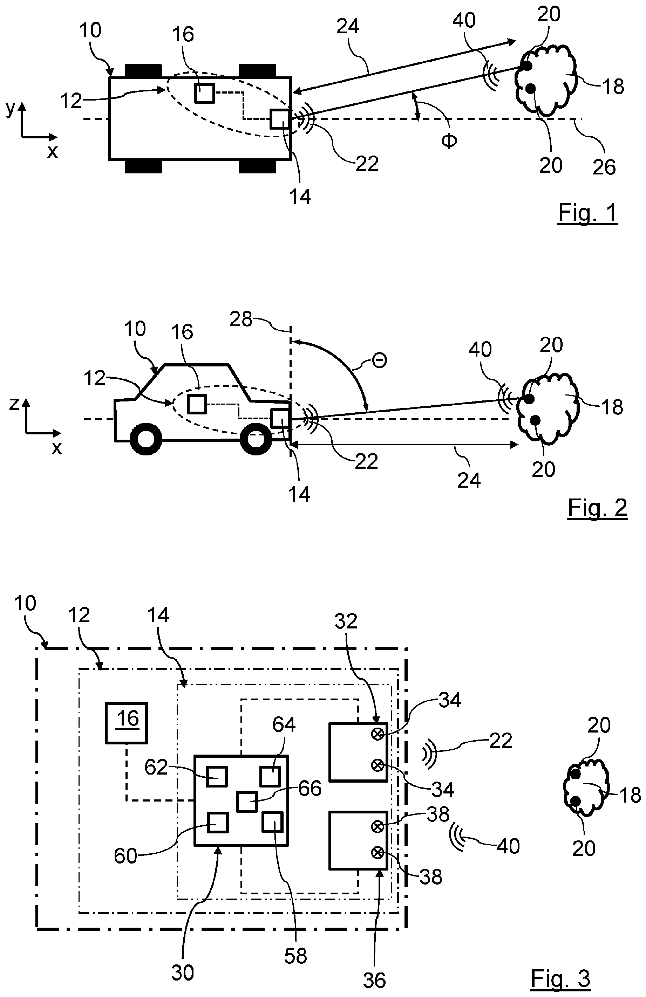

In figure 1 shows a top view of a vehicle 10 in the form of a passenger car. Figure 2 shows the vehicle 10 in a side view.

The vehicle 10 comprises a driver assistance system 12. Figure 3 shows a functional diagram of the vehicle 10 with the driver assistance system 12. With the driver assistance system 12 the vehicle 10 can be operated partly autonomous or autonomously.

The driver assistance system 12 comprises a radar system 14 and a control unit 16. With the radar system 14 an environment in front of the vehicle 10 can be monitored. The radar system 14 is connected to the control unit 16 so that data about the environment collected by the radar system 14 can be transmitted to the control unit 16. With the control unit 16 of the driver assistance system 12, operational functions of the vehicle 10 can be controlled on basis of the information obtained by the radar system 14.

The radar system 14 is exemplarily located in the front area of the vehicle 10, for example in the front bumper. The radar system 14 can be used to monitor a surveillance area in front of the vehicle 10 in the direction of travel, for example for objects 18. In the figures 1 to 3, an object 18 is shown as an example. The radar system 14 can also be arranged in a different position on the vehicle 10 and can be oriented differently. Several radar systems 14 can also be provided.

The radar system 14 can detect targets 20 of stationary or moving objects 18, for example vehicles, persons, animals, plants, obstacles, the ground, roadways, roadway irregularities, for example potholes or stones, roadway boundaries, (traffic) signs, signals, free spaces, for example parking spaces, precipitation or the like.

A target 20 in the sense of the invention is an area or a reflection point of an object 18 from which radar signals 22 can be reflected. An object 18 can have one or more such targets 20. If the object 18 has several targets 20, radar signals 22 can also be reflected differently from these, for example in different directions. Targets 20 detected with the radar system 14 may be referred to as detected targets 20 for easier distinction. In figures 1 to 3, only two targets 20 of the object 18 are shown as examples for the sake of clarity.

With the radar system 14, distances 24, directions and velocities of objects 18 relative to a reference system of the vehicle 10 can be determined. The reference system is a spherical coordinate system, for example. Azimuth Φ and elevation Θ serve as direction information to characterize the directions of detected targets 20. The origin of the spherical coordinate system is located at the intersection of the longitudinal axis 26 of the vehicle 10 and the vertical axis 28 of the vehicle 10. The azimuth Φ = 0° is on the longitudinal axis 26 of the vehicle 10.

The radar system 14 is designed as a multiple-input multiple-output (MIMO) radar. The radar system 14 comprises a control and evaluation device 30, a transmit antenna array 32 with multiple transmit antenna elements 34 for transmitting electromagnetic radar signals 22 and a receiving antenna array 36 with multiple receiving antenna elements 38 for receiving electromagnetic echo signals 40. By way of example, two transmit antenna elements 34 and two receiving antenna elements 38 are indicated in figure 3.

The transmit antenna elements 34 and the receiving antenna elements 38 generate a virtual antenna array 42 with multiple virtual antenna elements 44 for receiving echo signals 40 during a multiple-input multiple-output operation of the radar system 14. The virtual antenna array 42 is realized as a sparse virtual antenna array.

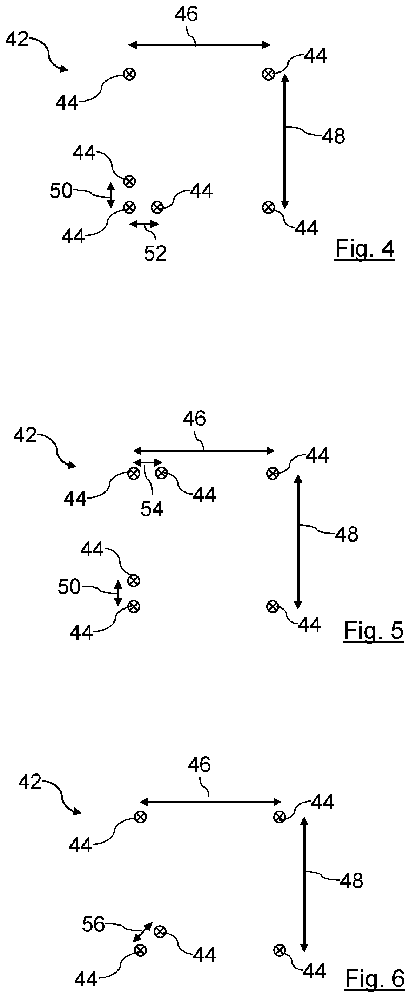

In figure 4 a first example of virtual antenna array 42 is shown. The virtual antenna array 42 comprises six virtual antenna elements 44. The virtual antenna elements 44 are located in one plane. Four most distant virtual antenna elements 44 are arranged at the corners of a square. In this way, a square virtual antenna array 42 is realized. The horizontal extension of the virtual antenna array 42 defines the horizontal aperture 46 of the antenna arrangement with the transmit antenna array 32 and the receiving antenna array 36. The vertical extension defines the vertical aperture 48 of the antenna arrangement. Spacing between the virtual antenna elements 44 arranged on adjacent corners of the square each correspond to the integer multiple of half the wavelength of the radar system 14. The fifth virtual antenna element 44 is arranged on the connection line between the virtual antenna element 44 at the lower left corner of the square and the virtual antenna element 44 on the upper left corner at a spacing 50 of approximately the half of a wavelength of the radar signals 22 from the virtual antenna elements 44 at the lower left corner. The sixth virtual antenna element 44 is arranged on the connection line between the virtual antenna element 44 at the lower left corner and the virtual antenna element 44 on the lower right corner at a spacing 52 of approximately the half of a wavelength of the radar signals 22 from the virtual antenna element 44 at the lower left corner.

In figure 5 a second example of a virtual antenna array 42 is shown. Unlike the virtual antenna array 42 depicted in figure 4, in the second example the sixth virtual antenna element 44 is arranged on the connection line between the virtual antenna element 44 at the upper left corner and the virtual antenna element 44 on the upper right corner at a spacing 54 of approximately the half of a wavelength of the radar signals 22 from the virtual antenna element 44 at the upper left corner.

In figure 6 a third example of the virtual antenna array 42 is shown. Unlike the virtual antenna array 42 according depicted in figure 4 the third example comprises only five virtual antenna elements 44. Four of the virtual antenna elements 44 are located at the corners of the square as in the first example in figure 4. The fifth virtual antenna element 44 is arranged on the connection line between the virtual antenna element 44 at the lower left corner and the virtual antenna element 44 on the upper right corner at a spacing 56 of approximately the half of a wavelength of the radar signals 22 from the virtual antenna element 44 at the lower left corner.

Further, the control and evaluation device 30 comprises means, for example analog-to-digital converters 58, for converting electromagnetic echo signals 40 into received data 72 suitable for signal processing.

The control and evaluation device 30 comprises Fourier transform means 60 for performing two-dimensional fast Fourier transforms 74 for determining magnitude information and phase information from received data 72. In combination with the sparse virtual antenna array 42 an undersampled system can be created.

Furthermore, the control and evaluation device 30 comprises data set means 62 for determining array data sets 80, which comprise the magnitude information and the phase information obtained with the virtual antenna elements 44.

Moreover, the control and evaluation device 30 comprises a neural network 64 to which data of array data sets 80 can be fed for determining position information characterizing the direction of the detected targets 20. The neural network 64 is designed as a spiking neural network 64. The spiking neural network 64 is well matched to time information content nature of the echo signals 40.

In addition, the control and evaluation device 30 comprises a storage medium 66 in which data of array data sets 80, position information and learning data for the neural network 64 can be stored.

At least parts of the means for carrying out the method for operating the radar system 14 can be realized by software. in the storage medium 66 of the control and evaluation device 30, for example flow charts, e.g. programs, algorithms and/or implementation tables for carrying out the method may be stored.

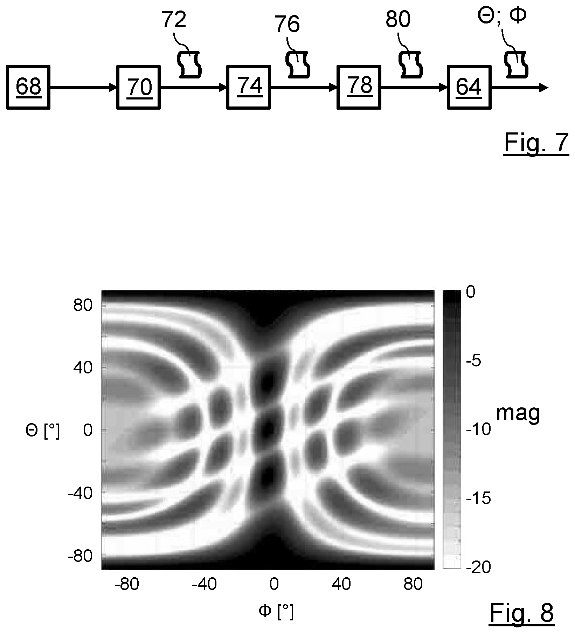

A method of operating the radar system 14 is described in more detail below using the flowchart in figure 7.

A series of measurements with several radar measurements is carried out with the radar system 14.

In a process step 68, radar signals 22 are transmitted for each measurement with each transmit antenna element 34 according to a MIMO mode of operation. The transmit antenna elements 34 and the receiving antenna elements 38 create the virtual antenna array 42 with multiple virtual antenna elements 44 during the MIMO mode of operation. If an object 18 is present in the field of view of the radar system 14, the radar signals 22 are reflected at the targets 20 of the object 18. Electromagnetic echo signals 40 resulting from the radar signal 22 reflected from the targets 20 are received by the virtual antenna elements 44.

In a process step 70, the received echo signals 40 are converted with the analog-to-digital converters 58 into received data 72 suitable for further signal processing.

Each antenna element in the virtual antenna array 44 has a complex number representing each the magnitude information and the phase information corresponding to the echo signals in a single Range Doppler cell and represent information about the number of targets and there direction (angle in azimuth and elevation) as sampled by the receiver array. This complex information is then transformed by the use of a two-dimensional Fourier transform 74. The resulting aperture pattern (example fig 8) is represented as magnitude information and phase information and can also be realized as complex magnitude/phase values.

In a process step 78, for each measurement, one array data set 80 is determined. The array data set 80 comprises the complex magnitude/phase values 76 with the magnitude information and the phase information of all virtual antenna elements 44. Additionally, the array data set 80 for each measurement comprises a time information, which characterizes the chronological position of said measurement within the series of measurements within a single Range Doppler cell. The time information can be used to characterize movements of the targets 20 relative to each other and can be used in the separability of multiple targets in the same Range Doppler bin.

Figure 8 shows a magnitude array image as a greyscale representation visualizing an aperture pattern for the magnitude information of an exemplary array data set 80 for multiple detected targets 20 with respect to the angle of arrival (AoA) of the received echo signal 40. The angle of arrival is characterized by azimuth Φ and elevation Θ. The magnitude information is defined according to a linear grayscale shown next to the magnitude array image.

A phase array image, not shown, as a greyscale representation visualizing an aperture pattern for the phase information with respect to the angle of arrival of the received echo signal 40 can be generated in accordance with the magnitude array image of figure 8.

After the array data set 80 is determined, the data of the array data set 80 is fed to the neural network 64. Said neural network can operate on both scalar values or complex values. With the neural network 64 the position information in form of azimuth Φ and elevation Θ for each detected target 20 is determined. The magnitude information, the phase information and the time information are treated as a single image, from which the direction information is learned by use of the neural network 64. The image of the magnitude information and the image of the phase information are paired with the corresponding time information and associated with a unique direction information.

The azimuth Φ, elevation Θ of each detected target 20 is transmitted to the control unit 16 of the driver assistance system 12. The driver assistance system 12 controls operational functions of the vehicle 10 based on the position information for the detected targets 20.

Optionally, prior to regular operation of the radar system 14, a two-process step learning technique may be performed to learn the neural network 64. The two-process step learning technique can be started by feeding idealized artificial array data sets 80 to the neural network 64. The idealized array data sets 80 characterize idealized aperture patterns both from the magnitude information and phase information. In this way, the neural network 64 can learn the learning principal. Then, a so-called starter enhancement can be performed. For this purpose, the complexity of the idealized artificial array data sets 80 for example can be increased by adding noise and/or random variations. Finally, the neural network 64 can be fed with real recorded array data sets 80.

## Claims

1. Method of operating a radar system (14), in particular a radar system (14) for a vehicle (10), in which
at least one electromagnetic radar signal (22) is transmitted from at least one transmit antenna element (34) of the radar system (14),
at least one electromagnetic echo signal (40) resulting from at least one radar signal (22) reflected from at least one target (20) in the field of view of the radar system (14) is received by at least one receiving antenna element (38) and converted into received data (72) suitable for signal processing,
at least one magnitude information (76) and at least one phase information (76) corresponding to the at least one received echo signal (40) are determined from at least a part of the received data (72),
at least one position information (Φ; Θ) is determined by use of machine learning (64), wherein the at least one position information (Φ; Θ) characterizing at least the direction of the at least one detected target (20) relative to a reference system, which is related to the radar system (14),
**characterized in that**
the radar system (14) is operated as a multiple-input multiple-output radar comprising multiple transmit antenna elements (34) and multiple receiving antenna elements (38), wherein the transmit antenna elements (34) and the receiving antenna elements (38) generate a virtual antenna array (42) with multiple virtual antenna elements (44) for receiving echo signals (40) during a multiple-input multiple-output operation of the radar system (14),
for at least a part of the virtual antenna elements (44) each a magnitude information (76) and a phase information (76) are determined from the at least one part of the received data (72) by performing at least one two-dimensional fast Fourier transform (74),
at least one array data set (80) is determined, which comprises at least the magnitude information (76) and the phase information (76) of the at least one part of the virtual antenna elements (44),
at least a part of the data of the at least one array data set (80) is fed to at least one neural network (64), with which at least one position information (Φ; Θ) for the at least one detected target (20) is determined.

2. Method according to claim 1, **characterized in that** as at least one position information at least one direction information, in particular an angle, for example the azimuth (Φ) and/or the elevation (Θ), and/or a vector, is determined, which characterizes a direction of the at least one detected target (20) relative to the reference system.

3. Method according to claim 1 or 2, **characterized in that** the at least one magnitude information and the at least one phase information and, if so, time information are realized as complex values (76), in particular as complex vectors.

4. Method according to one of the previous claims, **characterized in that** additionally time information is determined for at least a part of the virtual antenna elements (44).

5. Method according to one of the previous claims, **characterized in that** the at least one part of the data of the array data set (80) is fed to at least one neural network (64) designed as a spiking neural network.

6. Method according to one of the previous claims, **characterized in that** an antenna system (32, 36) with the transmit antenna elements (34) and the receiving antenna elements (38) is arranged and operated in a way to create an undersampled system and/or an antenna array (32, 36) with the transmit antenna elements (34) and the receiving antenna elements (38) is arranged and operated in a way to create a sparse virtual antenna array (42).

7. Method according to one of the previous claims, **characterized in that** four most distant virtual antenna elements (44) are arranged at the corners of a rectangle, in particular a square, whose side lengths (46, 48) each correspond to integer multiples of half the wavelength of the radar signals (22), and at least one additional virtual antenna element (44) is arranged at a distance (50, 52; 54; 56) of approximately the half of a wavelength of the radar signals (22) from one of the four most distant virtual antenna elements (44).

8. Method according to one of the previous claims, **characterized in that** a two-step learning technique is applied for learning the at least one neural network (64).

9. Method according to one of the previous claims, **characterized in that** the at least one neural network (64) is learned by array data sets (80) both from the magnitude information (76) and the phase information (76).

10. Radar system (14), in particular a radar system (14) of a vehicle (10), comprising at least one transmit antenna element (34) for transmitting electromagnetic radar signals (22),
at least one receiving antenna element (38) for receiving electromagnetic echo signals (40),
means for converting electromagnetic echo signals (40) into received data (72) suitable for signal processing,
means for determining magnitude information (76) and phase information (76) from received data (72),
means for determining at least one position information (Φ; Θ) characterizing at least the direction of the at least one detected target (20) by use of machine learning (64),
**characterized in that**
the radar system (14) comprises at least a part of means for carrying out the method according to one of the claims 1 to 9.

11. Driver assistance system (12) comprising at least one radar system (14), wherein the at least one radar system (14) comprising
at least one transmit antenna element (34) for transmitting electromagnetic radar signals (22),
at least one receiving antenna element (38) for receiving electromagnetic echo signals (40),
means for converting electromagnetic echo signals (40) into received data (72) suitable for signal processing,
means for determining magnitude information (76) and phase information (76) from received data (72),
means for determining at least one position information (Φ; Θ) characterizing at least the direction of the at least one detected target (20) by use of machine learning (64),
**characterized in that**
the driver assistance system (12) comprises at least a part of means for carrying out the method according to one of the claims 1 to 9.

12. Vehicle (10) comprising at least one radar system (14), wherein the at least one radar system (14) comprising
at least one transmit antenna element (34) for transmitting electromagnetic radar signals (22),
at least one receiving antenna element (38) for receiving electromagnetic echo signals (40),
means for converting electromagnetic echo signals (40) into received data (72) suitable for signal processing,
means for determining magnitude information (76) and phase information (76) from received data (72),
means for determining at least one position information (Φ; Θ) characterizing at least the direction of the at least one detected target (20) by use of machine learning (64),
**characterized in that**
the vehicle (10) comprises at least a part of means for carrying out the method according to one of the claims 1 to 9.
